# FASCICULE DE BREVET EUROPEEN

(11) **EP 3 903 366 B1**
(45) Date de publication et mention de la délivrance du brevet: **23.11.2022**
(21) Numéro de dépôt: 19848974.2
(22) Date de dépôt: 20.12.2019
(51) Int. Cl.: H01M 50/20, H01M 50/24

(54) **BOITIER DE STOCKAGE DE PILE ET ÉMETTEUR DE LOCALISATION D'URGENCE**
BATTERIE-SPEICHERGEHÄUSE UND NOTFALLORTUNGSSENDER
BATTERY CONTAINER AND EMERGENCY LOCATION TRANSMITTER

(30) Priorité: 28.12.2018 FR 1874379
(43) Date de publication de la demande: 03.11.2021
(73) Titulaire: Safran Aerosystems, 78370 Plaisir (FR)
(72) Inventeur: CECILLE, Jean-Philippe, 33170 Gradignan (FR); BANFI, Daniele, 48018 Faenza (IT)
(74) Mandataire: Plasseraud IP
(86) Numéro de dépôt international: PCT/FR2019/053264
(87) Numéro de publication internationale: WO 2020/136338

(56) Documents cités:
- EP-A1- 3 410 512
- US-A1- 2012 288 738
- US-A1- 2016 204 404
- US-A1- 2018 358 671

## Description

### Domaine technique

L'invention relève du domaine des batteries et des boitiers de stockage de pile en particulier du stockage de pile au Lithium. L'invention se rapporte également aux émetteurs de localisation d'urgence utilisés dans le domaine de l'aérospatial.

### Technique antérieure

Plusieurs accidents dus à l'emballement thermique de piles primaires et secondaires au Lithium se sont produits. L'emballement thermique de piles peut créer des dommages importants aux aéronefs. Pour éviter ces dommages, il est connu de disposer les appareils contenant des piles au Lithium dans des sacs en tissu spécifique ou dans des boitiers adaptés pour contenir les flammes et la chaleur. Le document US 2018/0358671 décrit un bloc-batterie comprenant un châssis définissant un corps pour maintenir des cellules de batterie. Le document US 20196/0204404 et le document EP 3 410 512 divulguent des boitiers de stockage de piles non spécifiques aux exigences de l'aéronautique.

Il est souhaitable de limiter les conséquences de l'emballement thermique des piles pour éviter la propagation d'un incendie.

### Exposé de l'invention

A cet effet, il est proposé un boitier de stockage de pile propre à stocker au moins une pile ayant une première extrémité munie d'une soupape de sécurité et une deuxième extrémité, ledit boitier comprenant :
- un carter métallique comportant une paroi de fond et des parois latérales; et
- au moins un support thermiquement isolant disposé dans le carter, ledit support comprenant :
- un épaulement surélevé par rapport à la paroi de fond du carter, la première extrémité de la pile étant en appui sur ledit épaulement ;
- au moins une paroi d'appui latérale, ladite au moins une pile étant en appui contre ladite au moins une paroi d'appui latérale de manière à tenir la pile à une première distance d'au moins une paroi latérale du carter, un premier espace d'air étant agencé entre ladite paroi latérale et ladite au moins une pile,
- au moins une ouverture disposée en dessous de l'épaulement pour permettre à des fumées et gaz sortant de la soupape de sécurité de s'échapper lors d'un emballement de la pile ;
- un caisson réalisé dans un matériau thermiquement isolant, ledit caisson formant un logement ayant des dimensions intérieures supérieures aux dimensions extérieures du carter ; ledit carter étant suspendu dans ledit logement par des attaches, un troisième espace d'air étant agencé entre le caisson et le carter, le carter étant en contact avec ledit caisson uniquement par l'intermédiaire desdites attaches.

Avantageusement, le fait de suspendre le carter dans le caisson permet de réaliser un isolant thermique autour du carter. En conséquence, la température extérieure du caisson sera plus faible.
Avantageusement, la pile ou les piles sont portées surélevées par rapport à la paroi de fond du carter métallique pour permettre aux résidus liquides sortant de la soupape de sécurité de couler au fond du carter, lors d'un emballement de la pile. Avantageusement, le support permet d'isoler physiquement la ou les pile(s) du carter et de créer des espaces d'air s'étendant autour de chaque pile. Ces espaces d'air vont permettre l'évacuation des fumées et gaz. Ces espaces d'air sont de plus des isolants thermiques.

Les caractéristiques exposées dans les paragraphes suivants peuvent, optionnellement, être mises en œuvre. Elles peuvent être mises en œuvre indépendamment les unes des autres ou en combinaison les unes avec les autres :
- Le support comporte une cavité inférieure creuse propre à recueillir des résidus liquides sortant de la soupape de sécurité lors d'un emballement de la pile.
- Le boitier de stockage de pile est destiné à stocker au moins deux piles et ledit boitier comporte au moins une paroi de séparation métallique située dans le carter, ladite paroi de séparation étant propre à délimiter au moins deux compartiments, ledit au moins un support étant propre à porter une pile dans chaque compartiment, la paroi d'appui latérale étant propre tenir la au moins une pile à une deuxième distance de ladite au moins une paroi de séparation, un premier espace d'air étant aménagé entre la paroi de séparation et la pile.
- Le boitier de stockage de pile comporte en outre un plateau de blocage thermiquement isolant ayant au moins un renfoncement propre à maintenir en position la deuxième extrémité de ladite au moins une pile.
- Le plateau de blocage comporte au moins un trou propre à être traversé par des fumées et gaz, lors de l'emballement de la pile.
- Le boitier comporte un couvercle métallique muni d'au moins un trou propre à être traversé par des fumées et gaz, lors de l'emballement de la pile.
- Le boitier comporte au moins un deuxième espace d'air délimité par un coin d'un compartiment et une partie du support disposée en regard du coin du compartiment et .dans lequel au moins un trou est réalisé au-dessus dudit au moins un deuxième espace d'air.
- L'épaulement est situé à une hauteur par rapport à la paroi de fond du carter, la hauteur est égale au moins 2 millimètres.

L'invention concerne également un émetteur de localisation d'urgence pour aéronef comportant un boitier de stockage de pile conforme aux caractéristiques mentionnées ci-dessus, un boitier complémentaire propre à se fixer dudit boitier de stockage de pile, un circuit électronique, ledit circuit électronique étant propre à générer un signal radiofréquence, une antenne connectée au circuit électronique pour émettre un signal de localisation d'urgence à partir du signal radiofréquence.
En particulier, ledit boitier complémentaire est propre à se fixer au-dessus dudit boitier de stockage de pile, le boitier complémentaire comportant des ouvertures communiquant avec le boitier de stockage de pile

Avantageusement, les fumées chaudes sortant par la soupape de sécurité de la pile, remonte dans l'espace d'air situé entre la pile et les parois 46 du carter, traverse les trous traversants 68 et remonte dans le boîtier complémentaire 6. Lorsque les fumées et gaz sont dans le boitier complémentaire, ils sont refroidis aux contacts des équipements électroniques contenus dans ce boitier, tel que par exemple la carte électronique.

### Brève description des dessins

D'autres caractéristiques, détails et avantages de l'invention apparaîtront à la lecture de la description détaillée ci-après, et à l'analyse des dessins annexés, sur lesquels :
[Fig. 1] est une vue en perspective d'un émetteur de localisation d'urgence selon la présente invention ;
[Fig. 2] est une vue en perspective éclatée d'un boitier de stockage de pile selon la présente invention ;
[Fig. 3] est une vue de dessus du boitier de stockage de pile illustré sur la figure 2 ;
[Fig. 4] est une section du boitier de stockage de pile selon le plan de coupe IV-IV illustré sur la figure 3 ;
[Fig. 5] est une section du boitier de stockage de pile selon le plan de coupe V-V illustré sur la figure 3 ;
[Fig. 6] est une vue en perspective de dessous d'une pile, de huit supports de pile et d'un plateau de blocage selon la présente invention ;
[Fig. 7] est une vue en perspective d'un boitier de stockage de pile selon la présente invention et d'une coiffe montée sur le boitier.

### Description des modes de réalisation

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

Par convention, dans la description qui va suivre, les termes « inférieur », « supérieur », « au-dessus », « en dessous » sont définis lorsque le boitier 4 de stockage de pile selon l'invention et l'émetteur selon l'invention sont disposés comme illustrés sur les figures, et sont nullement limitatifs.

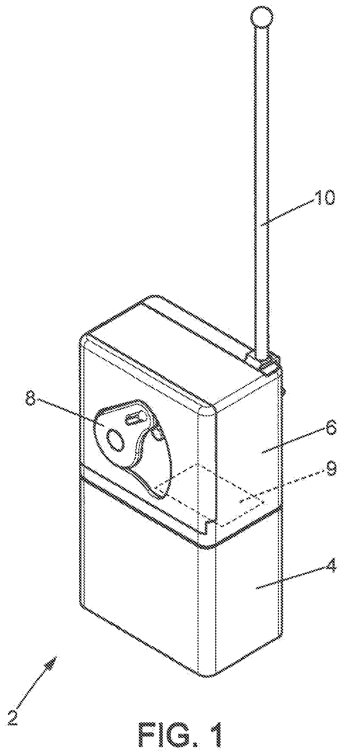

En référence à la figure 1, l'invention concerne un boitier 4 de stockage de pile et un émetteur 2 de localisation d'urgence qui comporte le boitier de stockage de pile et un boitier complémentaire 6 propre à se fixer au-dessus du boitier 4 de stockage de pile.

Le boitier complémentaire 6 comprend un levier 8 de déclenchement d'un signal de localisation, un circuit électronique 9 connecté au levier 8 de déclenchement et une antenne 10 connectée au circuit électronique 9. Le levier 8 de déclenchement est par exemple monté pivotant sur le boitier complémentaire 6. Le circuit électronique 9 peut être logé dans le boitier complémentaire 6 comme dans le mode de réalisation illustré. L'antenne 10 est par exemple fixée sur le boitier complémentaire.
Lorsque le levier 8 de déclenchement est pivoté, le circuit électronique 9 est propre à générer un signal radiofréquence. L'antenne 10 est propre à émettre un signal de localisation d'urgence à partir du signal radiofréquence.

Le boitier 4 de stockage de pile selon la présente invention est destiné à recevoir une ou plusieurs piles 12. Ces piles sont par exemple des piles primaire(s) ou secondaire(s) au Lithium. Selon la présente invention, ces piles peuvent ou pas être connectées électriquement les unes aux autres de manière à former une batterie. Les connexions électriques des piles vers un équipement consommateur d'électricité ou les éventuelles connexions électriques des piles entre elles, ne font pas partie de la présente demande de brevet et n'ont pas été représentées sur les figures.

Dans l'exemple représenté sur les figures, les piles 12 présentent une forme cylindrique ayant une première extrémité 14 munie d'une soupape de sécurité 16 et une deuxième extrémité 18 opposée à la première extrémité. Cette forme n'est nullement limitative, la présente invention s'appliquant également à des piles ayant une autre forme. La soupape de sécurité 16 est un dispositif de sécurité permettant l'échappement de fumées et gaz et de résidus liquides en cas de surpression dans la pile ou d'emballement de la pile. Elle est par exemple formée par un évent qui peut être équipé d'un clapet à bille ou d'un disque à rupture.

Un exemple de boitier 4 de stockage comportant huit piles 12 est décrit et illustré sur les figures. L'invention s'applique également à un boitier 4 de stockage comportant un nombre différent de piles. Ce nombre peut être supérieur ou égal à un.

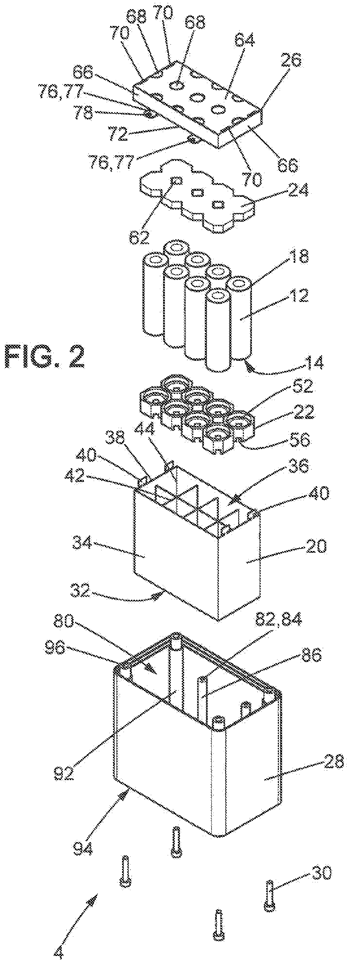

Comme visible sur la figure 2, le boitier 4 de stockage comporte un carter métallique 20, huit supports 22 thermiquement isolants propres à porter chacun une pile 12, un plateau de blocage 24 thermiquement isolant apte à être monté au-dessus des huit piles 12 et un couvercle métallique 26 propre à être monté sur le plateau de blocage 24 et à être fixé au carter 20.

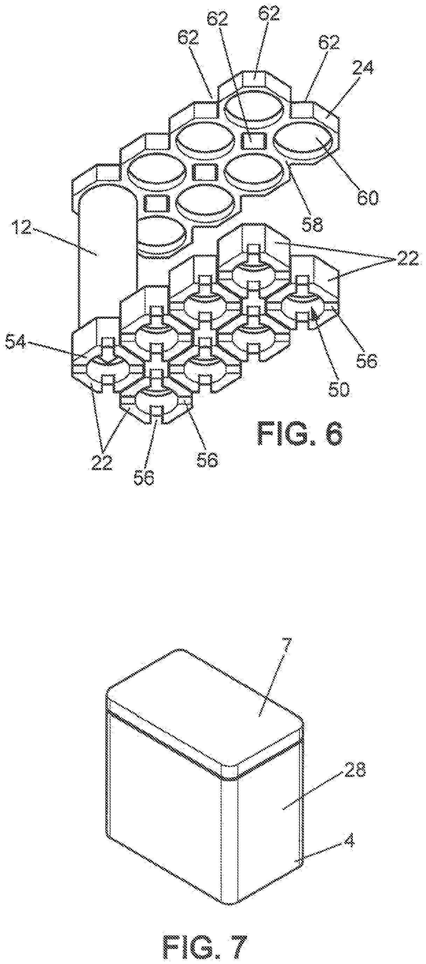

Le boitier 4 comporte également un caisson 28 accueillant le carter 20, les supports 22, le plateau 24, le couvercle 26, et des éléments 30 de fixation pour fixer le caisson 28 au boitier complémentaire 6 illustré sur la figure 1 ou à une coiffe 7 illustrée sur la figure 7.

Le carter 20 présente une forme générale parallélépipédique rectangle. Il possède une paroi de fond 32 et des parois latérales 34. Sa face supérieure 36 est ouverte. Le bord supérieur 38 de ces parois latérales présente deux languettes métalliques 40 s'étendant verticalement en saillie.

Dans le mode de réalisation représenté, le carter 20 comporte en outre des parois de séparation 42 métalliques s'étendant verticalement dans le carter. Dans l'exemple représenté, le carter 20 comporte trois parois de séparation 42 transversales et une paroi de séparation 42 longitudinale et centrale. Ces parois 42 délimitent huit compartiments 44. Chaque compartiment 44 est destiné à stocker un support de pile 22 et une pile 12.

Avantageusement, les parois de séparation 42 permettent d'isoler les piles 12 les unes des autres. Avantageusement également, les parois de séparation 42 sont propres à absorber une partie de la chaleur évacuée par une pile 12 lors de son emballement.

Chaque compartiment 44 présente une dimension intérieure supérieure à la dimension extérieure d'une pile 12. Une première distance D1 au moins supérieure à 0.5 millimètre sépare chaque pile 12 d'une paroi latérale 34 du carter. Une deuxième distance D2 au moins supérieure à 0.5 millimètre sépare chaque pile 12 d'une paroi de séparation 42. De préférence, la première ou la deuxième distance est égale à un millimètre. La première distance et deuxième distance peuvent être égale ou différente. Un premier espace d'air 46 est ainsi agencé entre chaque pile et une paroi latérale 34. Un premier espace d'air 46 est également prévu entre chaque pile 12 et une paroi de séparation 42. Ces premiers espaces d'air 46 forment des isolants thermiques et permettent l'évacuation des fumées et gaz en cas d'emballement d'une pile.

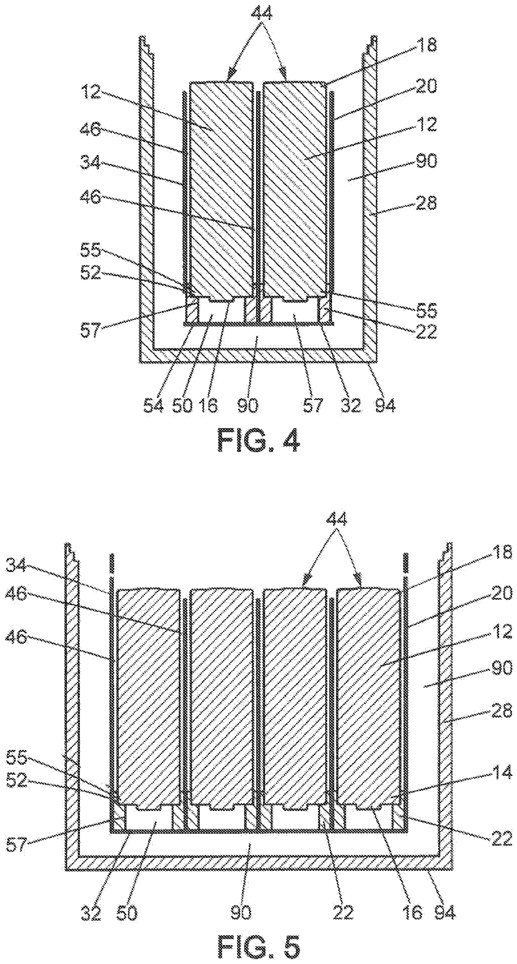

Comme visible sur les figures 4 à 6, les huit supports 22 sont agencés chacun dans un compartiment 44 sur la paroi de fond 32 du carter. Les huit supports 22 sont identiques. Un seul support 22 est décrit en détail.

Le support 22 présente la forme générale d'un bloc parallélépipédique. En particulier, dans le mode de réalisation représenté, le support 22 présente la forme d'un bloc cubique. Il comprend un épaulement intérieur 52 surélevé par rapport à la paroi de fond du carter 32, au moins une paroi d'appui latérale 55 propre à tenir la batterie à distance des parois latérale 34 et /ou à distance des parois de séparation 42 du carter. Le support 22 comprend également une cavité inférieure creuse 54 propre à recueillir les résidus liquides qui pourraient sortir de la soupape de sécurité 16 en cas d'emballement de la pile.

Dans le mode de réalisation illustré, le support 22 comporte un évidement central traversant 50 muni de l'épaulement 52. La partie supérieure 53 du support située au-dessus de l'épaulement 52, présente une forme circulaire complémentaire à la forme de la pile 12. Les parois de la partie supérieure 53 du support forment la paroi d'appui latérale 55. Cette paroi d'appui latérale 55 s'étend perpendiculairement à l'épaulement 52. Elle est adjacente à l'épaulement 55. La partie inférieure 57 du support située au-dessous de l'épaulement 52 forme la cavité inférieure creuse 54.

L'épaulement 52 est destiné à porter la première extrémité 14 de la pile qui est pourvue de la soupape de sécurité 16. La hauteur H de surélévation de l'épaulement 52 par rapport à la paroi de fond 32 est choisie de sorte que le volume de la cavité inférieure creuse 54 soit supérieur au volume maximum de résidu liquide pouvant s'échapper de la pile. La hauteur H est égale à au moins deux millimètres. De préférence, la hauteur H est égale à au moins cinq millimètres.

Comme l'épaulement 52 est surélevé de la hauteur H, les résidus liquides s'échappant de la soupape de sécurité 16 peuvent librement couler dans la cavité inférieure 54 et s'amasser sur la paroi de fond 32 du compartiment 44. Au contact du métal de la paroi de fond 32, les résidus liquides se refroidissent et se solidifient. Les résidus solidifiés sont ainsi piégés dans la cavité inférieure 54. Peu d'oxygène a accès à cette cavité inférieure 54 car elle est remplie de fumée et gaz. Comme les résidus liquides de Lithium ne sont en contact qu'avec peu d'oxygène, il n'y a pas de propagation des flammes à l'extérieur du support 22.

Le support 22 comporte en outre quatre ouvertures 56 disposées en dessous de l'épaulement 52. Ces ouvertures 56 forment des passages entre la cavité inférieure creuse 54 et le compartiment 44. Elles permettent à des fumées et gaz sortant de la soupape de sécurité 16 de s'échapper lors d'un emballement de la pile. Dans le mode de réalisation représenté, chaque ouverture 56 est située en regard d'un coin 49 d'un compartiment. Chaque ouverture 56 communique avec un deuxième espace d'air 48 délimité par un coin 49 d'un compartiment 44 et une partie du support 22 disposée en regard du coin 49 du compartiment.

De préférence, les quatre arêtes verticales du support 22 sont tronquées de manière à former quatre faces obliques 59. Les ouvertures 56 débouchent sur les faces obliques 59. Le dégagement existant entre la face oblique 59 du support et les parois du compartiment facilite l'échappement des fumées et gaz vers le deuxième espace d'air 48. Lorsque les piles 12 présentent une forme cylindrique comme dans l'exemple représenté, les deuxièmes espaces d'air 48 se prolongent sur toute la hauteur de chaque compartiment entre les coins 49 des compartiments 44 et une portion circulaire de la pile 12.

Avantageusement, les supports 22 sont destinés à porter les piles 12 afin qu'elles soient positionnées au centre et à distance des parois latérales 34 et des parois de séparation 42 du carter. Chaque support 22 permet d'isoler physiquement une pile 12 du carter 20 et de créer des premier 46 et deuxième 48 espaces d'air s'étendant autour de chaque pile. Ces premier 46 et deuxième 48 espaces d'air vont permettre l'évacuation des fumées et gaz qui s'échappent de la soupape de sécurité 16 et passent par les ouvertures 56. Ces premier 46 et deuxième 48 espaces d'air sont de plus des isolants thermiques.

En variante, les huit supports 22 sont fixés les uns aux autres et constituent un unique support. Lorsque cette variante est utilisée, les parois de séparation 42 sont amovibles et sont montées au-dessus de l'unique support et fixée les unes aux autres.

Le plateau de blocage 24 présente une forme rectangulaire. Sa face inférieure 58 comporte huit renfoncements 60 propres à recevoir la deuxième extrémité 18 des piles. A cet effet, ces renfoncements 60 présentent une forme complémentaire à la forme de la pile. Dans l'exemple représenté, ils sont circulaires. Le plateau de blocage 24 comporte des trous traversants 62 propres à être traversés par des fumées et gaz, lors de l'emballement de la pile. De préférence, ces trous 62 sont réalisés au-dessus des deuxièmes espaces d'air 48 délimités par les coins 49 des compartiments et une partie du support. Un seul trou 62 est aménagé au regard des coins 49 adjacents de différents compartiments 44 adjacents. Ainsi, dans le mode de réalisation représenté, cinq trous 62 sont réalisés à équidistance le long de chaque bord longitudinal du plateau de blocage et cinq autres trous 62 sont réalisés à équidistance le long d'une médiane longitudinale du plateau de blocage 24.

Les huit supports 22 et le plateau de blocage 24 sont réalisés dans un matériau thermiquement isolant et thermostable c'est-à-dire hautement résistant à la chaleur. Ce matériau est par exemple réalisé en polyétherimide ou du polyphenylsulfone.

En référence à la figure 2, le couvercle 26 comporte une paroi principale 64 et des parois latérales 66. La paroi principale 64 présente une forme rectangulaire. La paroi principale 64 présente des trous traversants 68 situés au-dessus et en regard des trous 62 du plateau de blocage. Ainsi, ces trous 68 sont réalisés au-dessus des deuxièmes espaces d'air 46.

Le bord transversal de la paroi principale 64 comprend des fentes 70 propres à recevoir les languettes 40 du carter. Lorsque le couvercle 26 est disposé sur le carter 20 et que les languettes 40 traversent les fentes 70, une partie des languettes 70 est repliée horizontalement pour solidariser le couvercle 26 au carter 20. Les bords longitudinaux libres 72 des parois latérales du couvercle comprennent des attaches 76 pour la fixation du couvercle 26 et du carter 20 au caisson 28. Les attaches 76 sont, par exemple, constituées par des lamelles 77 pourvues d'un orifice 78 et s'étendant horizontalement.

Le caisson 28 présente une forme parallélépipédique. Il est ouvert sur sa face supérieure 80. Il est par exemple moulé dans un matériau plastique isolant et thermostable c'est-à-dire hautement résistant à la chaleur tel que du polyétherimide ou en polyphenylsulfone.

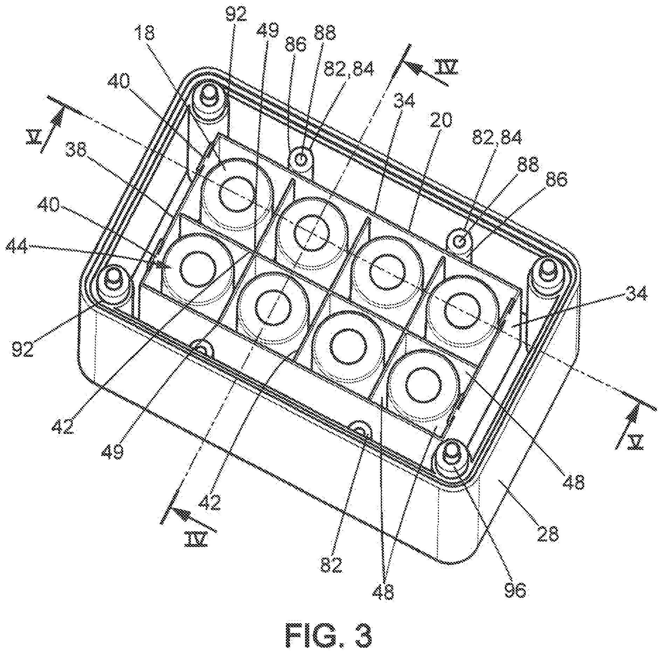

En référence aux figures 2 et 3, le caisson 28 comporte des parois de support 82 horizontales permettant de porter le carter 20 et le couvercle 26 suspendu à l'intérieur du caisson 28. Dans le mode de réalisation représenté, les parois 82 de support sont les parois d'extrémité 84 de cylindres verticaux moulés d'un seul bloc avec le caisson 28. Les cylindres verticaux 86 sont creux et sont positionnés le long de chaque pan longitudinal du caisson 28. Les parois 84 de support comprennent chacun un orifice taraudé 88. Des éléments de fixation non représentés de type vis sont vissés dans les orifices 78 des lamelles et dans les orifices taraudés 88 des parois de support pour fixer le couvercle 26 et son carter 20 suspendu dans le caisson 28.

Comme visible sur les figures 4 et 5, le caisson forme un logement ayant des dimensions intérieures supérieures aux dimensions extérieures du carter 20. Ainsi, une distance supérieure à 2 millimètres est prévue entre le caisson 28 et le carter 20. De préférence, cette distance est égale à 5 millimètres. Un troisième espace d'air 90 est ainsi aménagé entre le carter 20 et le caisson 28. Ce troisième espace d'air 90 est situé du côté et en dessous du carter 20. Ce troisième espace d'air 90 a pour fonction d'isoler thermiquement le carter 20 du caisson 28.

Le caisson 28 comporte en outre à chacun de ses coins une tubulure creuse 92 ayant une extrémité inférieure ouverte sur la face inférieure 94 du caisson et une extrémité supérieure 96 munie d'un taraudage. Des éléments de fixation 30 de type vis sont agencés dans les tubulures creuses 92 et vissés dans les taraudages de sorte que leur extrémité filetée soit vissée dans le boitier complémentaire 6 ou dans une coiffe 7, comme illustré sur la figure 7. Les cylindres 86 et les tubulures 92 sont moulés d'un tenant avec le caisson.

En variante, le carter 20 comporte des pattes de fixation au caisson et le couvercle 26 n'en comporte pas.

En référence à la figure 7, le boitier 4 de stockage de pile peut également être surmonté d'une coiffe 7.

Lorsque le boitier 4 de stockage est destiné à contenir une seule pile 12, le carter 20 ne comporte pas de paroi de séparation 42. La dimension intérieure du carter 20 est supérieure à la dimension d'une pile 12 de manière à aménager un premier espace d'air 46 entre la pile et les parois latérales 34 du carter. En variante, chaque support 22 ne comporte qu'une ouverture 56.

La cavité inférieure creuse 54 présente une taille suffisante pour contenir au moins 80 % des résidus solides et liquides propre à sortir d'une pile par la soupape de sécurité. En particulier, la cavité inférieure creuse présente un volume compris entre 3% et 25% du volume d'une pile. De manière générale, la cavité intérieure creuse présente un volume compris entre 0.25 cm³ à 2 cm³. Ainsi, par exemple, pour une pile de type AA contenant moins d'un gramme de lithium, la cavité intérieure creuse présente un volume de 1 cm³.

Le boitier complémentaire 6 comporte des ouvertures communiquant avec le boitier de stockage de pile 4. Ces ouvertures ne sont pas représentées sur la figure 1. Ces ouvertures sont disposées en regard du boitier de stockage de pile. Ces ouvertures présentent une surface supérieure à 0.5 cm². Le boitier complémentaire est propre à se fixer au-dessus dudit boitier de stockage de pile. En particulier, le boitier de stockage de pile communique avec le boitier complémentaire par l'intermédiaire des trous traversants 68 et par le troisième espace 90. Le boitier complémentaire est propre à se fixer au-dessus dudit boitier de stockage de pile. Lors de l'emballement de la pile, les fumées et gaz sortant de la pile vont dans le boitier complémentaire en passant par les premiers , deuxième et troisième espaces d'air, les trous traversants 68 et par les ouvertures du boitier complémentaire.

## Revendications

1. Boitier (4) de stockage de pile propre à stocker au moins une pile (12) ayant une première extrémité (14) munie d'une soupape de sécurité (16) et une deuxième extrémité (18), ledit boitier (4) comprenant :
- un carter métallique (20) comportant une paroi de fond (32) et des parois latérales (34); et
- au moins un support (22) thermiquement isolant disposé dans le carter métallique (20), ledit support (22) comprenant :
- un épaulement (52) surélevé par rapport à la paroi de fond (32) du carter, la première extrémité de la pile (12) étant en appui sur ledit épaulement (52) ;
- au moins une paroi d'appui latérale (55), ladite au moins une pile (12) étant en appui contre ladite au moins une paroi d'appui latérale (55) de manière à tenir la pile (12) à une première distance (D1) d'au moins une paroi latérale (34) du carter, un premier espace d'air (46) étant agencé entre ladite paroi latérale (34) et ladite au moins une pile (12),
- au moins une ouverture (56) disposée en dessous de l'épaulement (52) pour permettre à des fumées et gaz sortant de la soupape de sécurité (16) de s'échapper lors d'un emballement de la pile ;
- un caisson (28) réalisé dans un matériau thermiquement isolant, ledit caisson (28) formant un logement ayant des dimensions intérieures supérieures aux dimensions extérieures du carter (20) ; ledit carter (20) étant suspendu dans ledit logement par des attaches (76), un troisième espace d'air (90) étant agencé entre le caisson (28) et le carter (20), le carter (20) étant en contact avec ledit caisson (28) uniquement par l'intermédiaire desdites attaches (76).

2. Boitier (4) de stockage de pile selon la revendication 1, dans lequel le support (22) comporte une cavité inférieure (54) creuse propre à recueillir des résidus liquides sortant de la soupape de sécurité (16) lors d'un emballement de la pile (12).

3. Boitier (4) de stockage de pile selon l'une quelconque des revendications 1 et 2, ledit boîtier (4) étant destiné à stocker au moins deux piles (12), dans lequel ledit boitier (4) comporte au moins une paroi de séparation métallique (42) située dans le carter (20), ladite paroi de séparation (42) étant propre à délimiter au moins deux compartiments (44), ledit au moins un support (22) étant propre à porter une pile (12) dans chaque compartiment (44), la paroi d'appui latérale (55) étant propre tenir la au moins une pile (12) à une deuxième distance (D2) de ladite au moins une paroi de séparation (42), un premier espace d'air (46) étant aménagé entre la paroi de séparation (42) et la pile (12).

4. Boitier (4) de stockage de pile selon l'une quelconque des revendications 1 à 3, qui comporte en outre un plateau de blocage (24) thermiquement isolant ayant au moins un renfoncement (60) propre à maintenir en position la deuxième extrémité (18) de ladite au moins une pile.

5. Boitier (4) de stockage de pile selon la revendication 4, dans lequel le plateau de blocage (24) comporte au moins un trou (62) propre à être traversé par des fumées et gaz, lors de l'emballement de la pile (12).

6. Boitier (4) de stockage de pile selon l'une quelconque des revendications 1 à 5, qui comporte un couvercle métallique (26) muni d'au moins un trou (68) propre à être traversé par des fumées et gaz, lors de l'emballement de la pile (12).

7. Boitier (4) de stockage de pile selon la combinaison des revendications 3 et 5 ou 3 et 6, qui comporte au moins un deuxième espace d'air (48) délimité par un coin (49) d'un compartiment (44) et une partie du support (22) disposée en regard du coin (49) du compartiment et .dans lequel ledit au moins un trou (62,68) est disposé au-dessus dudit au moins un deuxième espace d'air (48).

8. Boitier (4) de stockage de pile selon l'une quelconque des revendications 1 à 7, dans lequel ledit épaulement (52) est situé à une hauteur (H) par rapport à la paroi de fond du carter (20), la hauteur (H) est égale au moins 2 millimètres.

9. Emetteur (2) de localisation d'urgence pour aéronef comportant un boitier (4) de stockage de pile selon l'une quelconque des revendications 1 à 8, un boitier complémentaire (6) propre à se fixer dudit boitier (4) de stockage de pile, un circuit électronique (9), ledit circuit électronique (9) étant propre à générer un signal radiofréquence, une antenne (10) connectée au circuit électronique (9) pour émettre un signal de localisation d'urgence à partir du signal radiofréquence.

10. Emetteur (2) de localisation d'urgence selon la revendication 9 dans lequel ledit boitier complémentaire (6) est propre à se fixer au-dessus dudit boitier (4) de stockage de pile, le boitier complémentaire comportant des ouvertures communiquant avec le boitier de stockage de pile.

## Patentansprüche

1. Batterielagergehäuse (4) zum Lagern zumindest einer Batterie (12), das ein erstes Ende (14) mit einem Sicherheitsventil (16) und ein zweites Ende (18) aufweist, wobei das Gehäuse (4) enthält:
- ein metallisches Behältnis (20) mit einer Bodenwand (32) und Seitenwänden (34); und
- zumindest einen wärmeisolierenden Träger (22), der in dem metallischen Behältnis (20) angeordnet ist, wobei der Träger (22) enthält:
- eine Schulter (52), die in Bezug auf die Bodenwand (32) des Behältnisses erhöht ist, wobei das erste Ende der Batterie (12) an der Schulter (52) anliegt;
- zumindest eine seitliche Stützwand (55), wobei die zumindest eine Batterie (12) an der zumindest einen seitlichen Stützwand (55) anliegt, um die Batterie (12) in einem ersten Abstand (D1) von zumindest einer Seitenwand (34) des Behältnisses zu halten, wobei ein erster Luftraum (46) zwischen der Seitenwand (34) und der zumindest einen Batterie (12) angeordnet ist,
- zumindest eine Öffnung (56), die unterhalb der Schulter (52) angeordnet ist, damit Rauch und Abgase, die aus dem Sicherheitsventil (16) austreten, bei einem Durchgehen der Batterie entweichen können;
- einen Kasten (28) aus einem wärmeisolierenden Material, wobei der Kasten (28) eine Aufnahme mit Innenabmessungen bildet, die größer sind als die Außenabmessungen des Behältnisses (20); wobei das Behältnis (20) mittels Aufhänger (76) in der Aufnahme aufgehängt ist, wobei ein dritter Luftraum (90) zwischen dem Kasten (28) und dem Behältnis (20) angeordnet ist, wobei das Behältnis (20) nur über die Aufhänger (76) mit dem Kasten (28) in Kontakt steht.

2. Batterielagergehäuse (4) nach Anspruch 1,
wobei der Träger (22) eine hohl ausgeführte untere Mulde (54) aufweist, die dazu geeignet ist, flüssige Rückstände aufzufangen, die bei einem Durchgehen der Batterie (12) aus dem Sicherheitsventil (16) austreten.

3. Batterielagergehäuse (4) nach einem der Ansprüche 1 und 2,
wobei das Gehäuse (4) dazu bestimmt ist, zumindest zwei Batterien (12) zu lagern, wobei das Gehäuse (4) zumindest eine metallische Trennwand (42) aufweist, die sich im Behältnis (20) befindet, wobei die Trennwand (42) dazu geeignet ist, zumindest zwei Fächer (44) zu begrenzen, wobei der zumindest eine Träger (22) dazu geeignet ist, eine Batterie (12) in jedem Fach (44) zu tragen, wobei die seitliche Stützwand (55) dazu geeignet ist, die zumindest eine Batterie (12) in einem zweiten Abstand (D2) von der zumindest einen Trennwand (42) zu halten, wobei ein erster Luftraum (46) zwischen der Trennwand (42) und der Batterie (12) angeordnet ist.

4. Batterielagergehäuse (4) nach einem der Ansprüche 1 bis 3, ferner enthaltend eine wärmeisolierende Sperrplatte (24) mit zumindest einer Vertiefung (60), die dazu geeignet ist, das zweite Ende (18) der zumindest einen Batterie in Stellung zu halten.

5. Batterielagergehäuse (4) nach Anspruch 4,
wobei die Sperrplatte (24) zumindest eine Lochung (62) aufweist, durch welche beim Durchgehen der Batterie (12) Rauch und Abgase treten können.

6. Batterielagergehäuse (4) nach einem der Ansprüche 1 bis 5, enthaltend einen Metalldeckel (26) mit zumindest einer Lochung (68), durch welche beim Durchgehen der Batterie (12) Rauch und Abgase treten können.

7. Batterielagergehäuse (4) nach den Ansprüchen 3 und 5 oder 3 und 6 in Kombination,
enthaltend zumindest einen zweiten Luftraum (48), der von einem Eckbereich (49) eines Fachs (44) und einem Teil des Trägers (22) begrenzt ist, der dem Eckbereich (49) des Fachs gegenüberliegend angeordnet ist, wobei die zumindest eine Lochung (62, 68) oberhalb des zumindest einen zweiten Luftraums (48) angeordnet ist.

8. Batterielagergehäuse (4) nach einem der Ansprüche 1 bis 7,
wobei die Schulter (52) in einer Höhe (H) bezüglich der Bodenwand des Behältnisses (20) angeordnet ist, wobei die Höhe (H) zumindest 2 Millimeter beträgt.

9. Notortungssender (2) für Luftfahrzeuge, enthaltend ein Batterielagergehäuse (4) nach einem der Ansprüche 1 bis 8, ein Zusatzgehäuse (6), das dazu geeignet ist, an dem Batterielagergehäuse (4) befestigt zu werden, eine elektronische Schaltung (9), wobei die elektronische Schaltung (9) dazu geeignet ist, ein Hochfrequenzsignal zu erzeugen, eine Antenne (10), die mit der elektronischen Schaltung (9) verbunden ist, um ausgehend von dem Hochfrequenzsignal ein Notortungssignal zu senden.

10. Notortungssender (2) nach Anspruch 9,
wobei das Zusatzgehäuse (6) dazu geeignet ist, über dem Batterielagergehäuse (4) befestigt zu werden, wobei das Zusatzgehäuse Öffnungen aufweist, die mit dem Batterielagergehäuse in Verbindung stehen.

## Claims

1. A battery storage housing (4) able to store at least one battery (12) having a first end (14) provided with a safety valve (16) and a second end (18), said housing (4) comprising:
- a metal casing (20) including a bottom wall (32) and side walls (34); and
- at least one thermally insulating support (22) disposed in the metal casing (20), said support (22) comprising:
- a shoulder (52) raised with respect to the bottom wall (32) of the casing, the first end of the battery (12) bearing on said shoulder (52);
- at least one lateral bearing wall (55), said at least one battery (12) bearing against said at least one lateral bearing wall (55) so as to hold the battery (12) at a first distance (D1) of at least one side wall (34) of the casing, a first air gap (46) being arranged between said side wall (34) and said at least one battery (12),
- at least one opening (56) disposed below the shoulder (52) to allow fumes and gases leaving the safety valve (16) to escape during runaway of the battery;
- a box (28) made of a thermally insulating material, said box (28) forming a housing having internal dimensions greater than the external dimensions of the casing (20); said casing (20) being suspended in said housing by clips (76), a third air gap (90) being arranged between the box (28) and the casing (20), the casing (20) being in contact with said box (28) only through said clips (76).

2. The battery storage housing (4) according to claim 1, wherein the support (22) includes a hollow lower cavity (54) able to collect liquid residues coming out of the safety valve (16) during runaway of the battery (12).

3. The battery storage housing (4) according to any one of claims 1 and 2, said housing (4) being intended to store at least two batteries (12), wherein said housing (4) includes at least one metal separation wall (42) located in the casing (20), said separation wall (42) being able to delimit at least two compartments (44), said at least one support (22) being able to carry a battery (12) in each compartment (44), the lateral bearing wall (55) being able to hold the at least one battery (12) at a second distance (D2) from said at least one separation wall (42), a first air gap (46) being provided between the separation wall (42) and the battery (12).

4. The battery storage housing (4) according to any one of claims 1 to 3, which further includes a thermally insulating blocking plate (24) having at least one recess (60) able to hold the second end (18) of said at least one battery in position.

5. The battery storage housing (4) according to claim 4, wherein the blocking plate (24) includes at least one hole (62) able to be traversed by fumes and gases, during the runaway of the battery (12).

6. The battery storage housing (4) according to any one of claims 1 to 5, which includes a metal cover (26) provided with at least one hole (68) able to be traversed by fumes and gases, during runaway of the battery (12).

7. The battery storage housing (4) according to the combination of claims 3 and 5 or 3 and 6, which includes at least one second air gap (48) delimited by a corner (49) of a compartment (44) and a portion of the support (22) disposed opposite the corner (49) of the compartment and wherein said at least one hole (62, 68) is disposed above said at least one second air gap (48).

8. The battery storage housing (4) according to any one of claims 1 to 7, wherein said shoulder (52) is located at a height (H) with respect to the bottom wall of the casing (20), the height (H) is equal to at least 2 millimetres.

9. An emergency location transmitter (2) for aircraft including a battery storage housing (4) according to any one of claims 1 to 8, a complementary housing (6) able to be fixed above said battery storage housing (4), an electronic circuit (9), said electronic circuit (9) being able to generate a radiofrequency signal, an antenna (10) connected to the electronic circuit (9) to transmit an emergency location signal from the radio frequency signal.

10. The emergency location transmitter (2) according to claim 9, wherein said additional housing (6) is able to be fixed above said battery storage housing (4), the additional housing including openings communicating with the battery storage housing.
